# EUROPÄISCHE PATENTANMELDUNG

(11) **EP 1 205 274 A1**
(43) Veröffentlichungstag der Anmeldung: **15.05.2002**
(21) Anmeldenummer: 01125246.7
(22) Anmeldetag: 24.10.2001
(51) Int. Cl.: B23D 61/04, B23D 65/00

(54) **Sägeband und Verfahren zu seiner Herstellung**

(30) Priorität: 02.11.2000 DE 10054296
(71) Anmelder: WIKUS-Sägenfabrik Wilhelm H. Kullmann GmbH & Co. KG., 34286 Spangenberg (DE)
(72) Erfinder: Fluhrer, Manfred, Dipl.-Ing., 34286 Spangenberg (DE); Kullmann, Jörg H., Dr. techn., 34286 Spangenberg (DE)
(74) Vertreter: Patentanwälte Rehberg + Hüppe

(57) **Zusammenfassung**

Ein Sägeband (1) für insbesondere abrasive Werkstoffe, ist mit einem bandförmigen Grundkörper (2) und an dessen einer Längskante vorgesehenen Vorsprüngen (4) versehen, die je einen Sitz (12) aufweisen, an dem je ein Formkörper (5) aus hartem Schneidstoff befestigt ist. Der Formkörper (5) weist in der Haupterstreckungsebene (6) des Sägebandes (1) einen Querschnitt (15) und eine definierte, sich quer zur Haupterstreckungsebene (6) erstreckende Schneide (10) auf. Jeder Vorsprung (4) bildet mit seinem Formkörper (5) einen Zahn (3). Der Querschnitt (15) des Formkörpers (5) ist in der Haupterstreckungsebene (6) des Sägebandes (1) auf der dem Sitz (12) zugekehrten Seite von einer Kreisbogenlinie (16) und auf der dem Sitz (12) abgekehrten Seite von einer Frontlinie (17) einer Fläche (18) begrenzt. Die Kreisbogenlinie (16) und die Frontlinie (17) schließen einen Keilwinkel (22) kleiner 90° ein und sind unter Bildung eines Freiwinkels (23) angeordnet.

## Beschreibung

Die Erfindung betrifft ein Sägeband für insbesondere abrasive Werkstoffe, mit einem bandförmigen Grundkörper und an dessen einer Längskante vorgesehenen Vorsprüngen, die je einen Sitz aufweisen, an dem je ein Formkörper aus hartem Schneidstoff befestigt ist, der in der Haupterstreckungsebene des Sägebandes einen Querschnitt und eine definierte, sich quer zur Haupterstreckungsebene erstreckende Schneide aufweist, wobei jeder Vorsprung mit seinem Formkörper einen Zahn bildet. Es wird auch ein Verfahren zur Herstellung eines Sägebandes zum Zerteilen insbesondere abrasiver Werkstoffe aufgezeigt, indem an einem bandförmigen Grundkörper und an dessen einer Längskante Vorsprünge mit je einem Sitz gebildet werden, an jedem Sitz je ein Formkörper aus hartem Schneidstoff befestigt wird, und der Formkörper auf der dem Sitz abgekehrten Seite eine Fläche zur Bildung einer Schneide eines Zahns bekommt oder aufweist.

Insbesondere kann die Fläche eines Zahns geschliffen werden. Die Erfindung ist nicht auf ein sich im wesentlichen geradlinig erstreckendes Sägeband beschränkt. Sie kann ebenso bei einem Kreissägeblatt eingesetzt werden. Das Sägeband wird insbesondere beim Zerteilen abrasiver Werkstoffe eingesetzt. Unter abrasiven Werkstoffen werden harte und spröde Materialien, wie Bausteine, Porenbetonsteine, Graphit und ähnliches verstanden, von denen beim Sägen keine Späne, sondern Bruchstücke unregelmäßiger Formgebung abgenommen werden.

Ein Sägeband der eingans beschriebenen Art ist aus der DE 33 07 170 C2 bekannt. Das Sägeband weist einen bandförmigen Grundkörper und an dessen einer Längskante vorgesehenen Zähnen auf. Jeder Zahn baut auf einem Vorsprung auf, an dem je einen Sitz ausgebildet ist, an dem je ein Formkörper aus hartem Schneidstoff befestigt ist. Als Formkörper werden Schneidstoff-Platten eingesetzt, die somit etwa platten- oder quaderförmige Gestalt aufweisen und ganz oder weitgehend fertig bearbeitet sind. Die Schneidstoff-Platten können somit vor ihrer Befestigung an den Vorsprüngen auf allen Seiten im Sinne der erforderlichen Freischnitte bzw. Freiwinkel am Zahnrücken und an den beiden Flanken unter Bildung ebener Flächen geschliffen sein. Durch unterschiedliche Befestigung an den Vorsprüngen können unterschiedliche Wirkspanwinkel erzeugt werden. Es ist aber auch möglich, die Schneidstoff-Platten nach ihrer Befestigung an den Vorsprüngen zu schleifen. Das Schleifen der als Schneidstoff-Platten ausgebildeten Formkörper, gleichgültig ob vor oder nach Ihrer Befestigung an den Vorsprüngen, ist eine mehrstufige aufwendige und somit kostenintensive Bearbeitung im Bereich der Zahnbrust, des Zahnrückes und der beiden Zahnflanken. Jeder Formkörper bekommt dabei eine definierte, durch ebene Flächen begrenzte Gestalt mit einem in der Haupterstreckungsebene des Sägebandes etwa rechteckigem Querschnitt und unter Ausbildung einer definierten, sich quer zur Haupterstreckungsebene erstreckende Schneide. Die Formkörper können aus Hartmetall, Schnellstahl, keramischem Schneidstoff, mit Diamantpartikeln versetztem Sintermaterial o. dgl. bestehen. Beim Schleifen wird 30 bis 70 % dieses im Vergleich zum Material des Grundkörpers teuren Materials wieder entfernt.

Auch aus der EP 0 266 022 A2 oder der US 4,011,783 sind solche gattungsgemäßen Sägebänder bekannt, bei denen die Zähne jedoch in der bekannten Vor- und Nachschneidertechnik zum Ausräumen dreigeteilter Späne auf dem Schnittkanal gestaltet sind. Als Formkörper werden quaderförmige Blöcke aus z. B. Wolframkarbid an den Sitzen der Vorsprünge durch Löten befestigt. Anschließend werden die Formkörper und die Vorsprünge zur Ausbildung der Vor- und der Nachschneider unter Erzeugung der Freiwinkel im Bereich der Zahnbrust, des Zahnrücken und der beiden Zahnflanken aufwendig und jeweils unterschiedlich geschliffen.

Der Erfindung liegt die Aufgabe zugrunde, ein Sägeband der eingangs beschriebenen Art bereitzustellen, das preiswerter herstellbar ist. Es soll auch ein Verfahren zur Herstellung eines solchen Sägebandes aufgezeigt werden, welches einfacher durchführbar ist.

Erfindungsgemäß wird dies bei einem Sägeband der eingangs beschriebenen Art dadurch erreicht, daß der Querschnitt des Formkörpers in der Haupterstreckungsebene des Sägebandes auf der dem Sitz zugekehrten Seite von einer Kreisbogenlinie und auf der dem Sitz abgekehrten Seite von einer Frontlinie einer Fläche begrenzt ist, und daß die Kreisbogenlinie und die Frontlinie einen Keilwinkel kleiner 90° einschließen und unter Bildung eines Freiwinkels angeordnet sind.

Die Erfindung geht von dem Gedanken aus, Formkörper mit einer zumindest teilweise "runden" Gestalt einzusetzen. Der Formkörper kann als Kugel, als Teil einer Kugel, als Zylinder oder als Teil eines Zylinders in den jeweiligen Vorsprung am Grundkörper des Sägebandes eingesetzt bzw. dort befestigt werden. Eine Kugel läßt sich beim Befestigen an dem Vorsprung sehr einfach handhaben, weil sie - gleichgültig wie und in welchem Winkel sie ergriffen wird - gleichsam automatisch ausgerichtet ist. Bei einem Teil einer Kugel, z. B. einer Halbkugel, ist die Lage der die Kugel teilenden Fläche zu beachten. Bei einem Zylinder ist zusätzlich dessen Achse zu beachten. Bei einem Teil eines Zylinders ist dessen Achse und die Lage der den Zylinder teilenden Fäche zu beachten. Bei Verwendung eines Formkörpers mit einer solchen zumindest teilweise "runden" Gestalt entsteht durch eine einzige Fläche einerseits eine definierte sich quer zur Haupterstreckungsebene erstreckende Schneide mit Schnittkante. Diese einzige Fläche kann die die Kugel oder den Zylinder teilende Fläche sein und/oder durch einen einzigen Schleifvorgang erzeugt werden, der am Formkörper vor oder nach seiner Befestigung am Grundkörper des Sägebandes angebracht wird. Die Fläche kann auch mit der Herstelllung des Formkörpers mitgeformt werden, z. B. durch Pressen und Sintern des die Fläche tragenden Formkörpers. Diese einzige Fläche kann als ebene Fläche oder als z. B. gekrümmt verlaufende Fläche ausgebildet sein. Andererseits entsteht beim Befestigen auf dem Vorsprung gleichsam automatisch aus der Restfläche des Formkörpers eine Freifläche mit Freiwinkel. Diese Freifläche hat noch den Vorteil, daß sie als Kugeloberfläche oder als Zylindermantelfläche ausgebildet ist. Bei Gebrauch des Sägebandes sich unvermeidlich einstellende Verschleißmarken erhalten entgegen der Bandlaufrichtung eine kürzere Erstreckung als bei einer ebenen Freifläche.

Die von dem Querschnitt des Formkörpers gebildete Kreisbogenlinie und die von der Fläche bereitgestellte Frontlinie des Formkörper müssen einen Keilwinkel einschließen, der jedenfalls nicht wesentlich größer als 90° ist. Bei Verwirklichung eines Spanwinkels von 0° kann der Keilwinkel allenfalls 90° betragen, bei einem positiven Spanwinkel muß er kleiner als 90° sein, bei einem negativen Spanwinkel kann der Keilwinkel entsprechend größer als 90° sein oder werden. In allen Fällen ist die Fläche so anzuordnen, daß an dem durch den Formkörper mitgebildeten Zahn ein Freiwinkel entsteht. Der Freiwinkel bzw. die Freifläche erstreckt sich zumindest im Bereich des Zahnrückens. Bei Verwendung der Kugel erstrecken sich die Freiwinkel bzw. die Freiflächen sogar auch über den Bereich der Flanken.

Besonders vorteilhaft ist es, bei Verwendung einer kugelförmigen Gestalt des Formkörpers weniger als eine Halbkugel einzusetzen und/oder nach dem einzigen Schliff weniger als eine Halbkugel an dem fertigen Zahn zurückzubehalten. Die dann bogenförmig verlaufenden Scheide mit ihrer Schnittkante hat nicht nur im Bereich des Zahnrückes und der Flanken eine kugeloberflächlich verlaufende Freifläche. Zusätzlich entsteht am Zahn gleichsam automatisch ein Flankenwinkel von 180° und ein Flankenfreiwinkel in Richtung senkrecht zur Bandlaufrichtung von 0°. Der Flankenfreiwinkel in Bandlaufrichtung ist größer als 0°, beispielsweise 5°, wenn z. B. als Formkörper an dieser Stelle weniger als eine Halbkugel eingesetzt wird. Dieser Verlauf der Flankengestaltung ist besonders sinnvoll für lange Standzeit des Sägebandes und für eine besondere Oberflächengüte der geschnittenen Flächen im Schnittkanal. Ähnliche Vorteile entstehen bei Verwendung eines zylindrischen Formkörpers, bei dem die Übergänge zwischen der Mantelfläche und den Stirnflächen abgerundet ausgebildet sind. Wenn die Stirnflächen des zylindrischen Formkörpers als Kugelflächen ausgebildet sind entstehen in Verbindung mit einer Schränkung des Zahns die gleichen Vorteile wie beim Einsatz einer Kugel.

Das erfindungsgemäße Verfahren zur Herstellung eines Sägebandes zum Zerteilen insbesondere abrasiver Werkstoffe kennzeichnet sich dadurch, daß an jedem Sitz als Formkörper eine Kugel, der Teil einer Kugel, ein Zylinder oder der Teil eines Zylinders befestigt so wird, daß die Schneide einen Keilwinkel kleiner 90° hat und ein Freiwinkel gebildet ist.

Bei positivem Spanwinkel muß der Keilwinkel kleiner als 90° sein. Der Freiwinkel am Kopf des Zahns und der Flankenfreiwinkel können durchaus relativ klein sein, da die die Freiwinkel bildenden Flächen des Formkörpers entgegen der Bandlaufrichtung zunehmend zurücktreten, und zwar stärker als bei Verwendung ebener Flächen.

Besonders vorteilhaft ist es, wenn der Formkörper nur auf der dem Sitz abgekehrten Seite geschliffen wird.

Dieser einzige Schleifvorgang wird an dem Formkörper vor oder nach seiner Befestigung an dem Grundkörper durchgeführt. Es versteht sich, daß auch unterschiedliche Wirkspanwinkel geschliffen werden können. Zur Realisierung der Vor- und Nachschneidertechnik können abwechselnd kugelförmige und zylindrische Formkörper auf den Vorsprüngen eines Sägebandes befestigt werden. Es können auch Zahngruppen mit mehr als zwei Zähnen mit einer Höhen- und Breitenstufung realisiert werden, die auf der vorliegenden Erfindung aufbauen.

Auch der Kugeldurchmesser und die Länge des Zylinders relativ zur Dicke des Grundkörpers ist zu beachten. Wenn Kugeln eingesetzt werden, deren Durchmesser erheblich größer als die Dicke des Grundkörpers ist, oder wenn Zylinder eingesetzt werden, deren Länge größer als die Dicke des Grundkörpers ist und die z. B. durch Halbkugeln begrenzt werden, können gerade, also ungeschränkte, Zähne eingesetzt werden. Wenn Kugeln eingesetzt werden, deren Durchmesser wenig größer als die Dicke des Grundkörpers ist, oder wenn Zylinder eingesetzt werden, deren Länge wenig größer als die Dicke des Grundkörpers ist, kann es erforderlich oder sinnvoll sein, die Zähne oder zumindest einige der Zähne zu schränken.

Die Erfindung wird anhand bevorzugter Ausführungsbeispiele weiter erläutert und beschrieben. Es zeigen:
- Fig. 1: eine Seitenansicht des Sägebandes im Bereich eines Zahnes, teilweise geschnitten,
- Fig. 2: eine Stirnansicht des Zahnes in einer ersten Ausführungsform,
- Fig. 3: eine Stirnansicht des Zahnes in einer zweiten Ausführungsform,
- Fig. 4: eine ähnliche Darstellung wie Fig. 1, jedoch an einer weiteren Ausführungsform,
- Fig. 5: eine Stirnansicht eines Sägebandes mit einer Zahnfolge aus drei Zähnen, von denen zwei Zähne geschränkt sind,
- Fig. 6: eine Stirnansicht eines Sägebandes in Vor- und Nachschneidertechnik,
- Fig. 7: eine Stirnansicht eines Sägebandes in einer weiteren Ausführungsform,
- Fig. 8: eine Draufsicht auf das Sägeband gemäß Fig. 7,
- Fig. 9: eine Vergleichsskizze des Anmeldungsgegenstandes mit dem Stand der Technik zur Verdeutlichung der unterschiedlichen Länge von Verschleißmarken,
- Fig. 10: eine Stirnansicht eines Sägebandes mit drei Zähnen in der Zahnfolge, und
- Fig. 11: eine Stirnansicht auf ein Sägeband mit abwechselnd rechts und links geschränkten Zähnen.

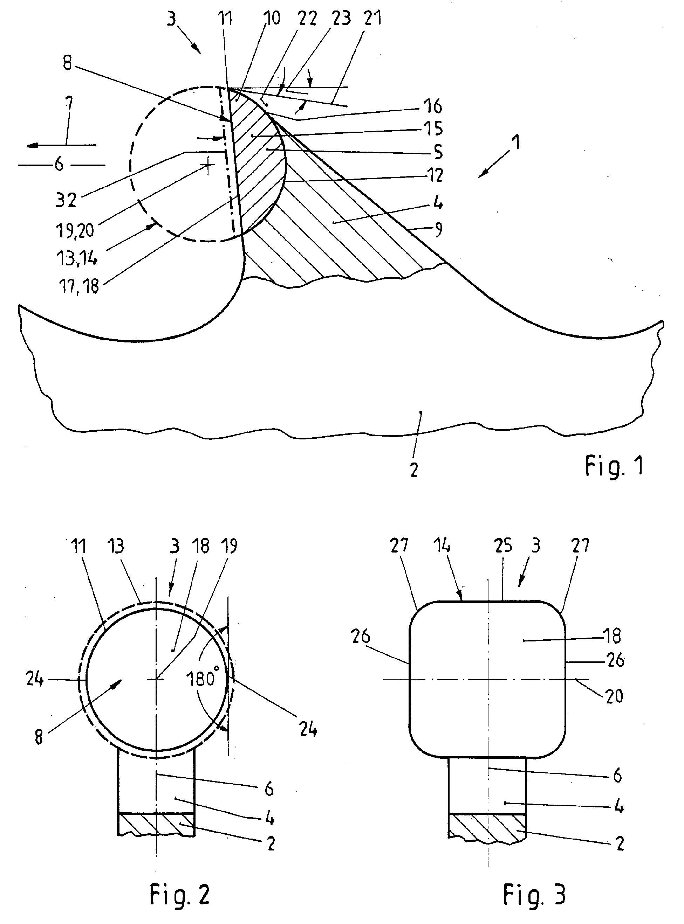

In Fig. 1 ist ein kleiner Ausschnitt eines Sägebandes 1 in Seitenansicht dargestellt. Das Sägeband 1 weist einen hier nur teilweise dargestellten Grundkörper 2 auf, dessen eine Längskante mit Zähnen 3 versehen ist, von denen der Übersichtlichkeit halber nur ein Zahn 3 dargestellt ist. Der Zahn 3 wird an dem Grundkörper von einem Vorsprung 4 und einem Formkörper 5 gebildet. Ein Teil des Vorsprungs 4 und der Formkörper 5 sind geschnitten dargestellt. Die Schnittebene entspricht der Zeichenebene und stellt eine Haupterstreckungsebene 6 dar, in welcher das Sägeband 1 gemäß Pfeil 7 beim Sägen bewegt wird (Bandlaufrichtung). Der Zahn 3 weist in üblicher Weise eine Zahnbrust 8 und einen Zahnrücken 9 auf. Zwischen Zahnbrust 8 und Zahnrücken 9 wird von dem Formkörper 5 eine Schneide 10 mit einer Schnittkante 11 gebildet.

Der Vorsprung 4, der sich in der bekannten Formgebung von einer Einschweifung bis zur benachbarten Einschweifung hinzieht, besitzt einen Sitz 12, der der Befestigung des Formkörpers 5 dient. Als Formkörper 5 wird eine Kugel 13, ein Teil einer Kugel 13, ein Zylinder 14 oder ein Teil eines Zylinders 14 eingesetzt. Solche Formkörper bestehen aus hartem Schneidstoff, beispielsweise Wolframcarbid, Hartmetall, Schnellstahl oder sonstigen Sinterwerkstoffen mit hartem Schneidstoffanteil. Am fertig hergestellten Sägeband 1 weist der Formkörper 5 aus der Kugel 13 oder dem Zylinder 14 in der Haupterstreckungsebene 6 einen Querschnitt 15 auf, der sichelförmig ausgebildet ist. Der sichelförmige Querschnitt 15 des Formkörpers 5 wird auf der dem Sitz 5 zugekehrten Seite in der Haupterstreckungsebene 6 von einer Kreisbogenlinie 16 begrenzt, auf der dem Vorsprung 4 in Richtung des Pfeiles 7 abgekehrten Seite dagegen von einer Frontlinie 17. Die Frontlinie 17 ist hier als gerade verlaufende Linie ausgebildet und Bestandteil einer geschliffenen Fläche 18, die sich senkrecht zur Haupterstreckungsebene 6 erstreckt und Bestandteil der Zahnbrust 8 ist. Die Fläche 18 mit ihrer Frontlinie 17 ist so gelegt, daß am fertigen Zahn weniger als die Hälfte der Kugel 13 bzw. des Zylinders 14 vorhanden ist. Dies ist relativ zum Mittelpunkt 19 der Kugel 13 bzw. zur Achse 20 des Zylinders 14 aus Fig. 1 erkennbar. Die Fläche 18 stellt die einzige Fläche des Zahnes 3 dar, die geschliffen ausgebildet ist oder durch z. B. einen Sintervorgang von vornherein so erzeugt wird. Für den Aufbau des Zahnes 3 gibt es grundsätzlich zwei unterschiedliche Möglichkeiten. Entweder wird die Kugel 13 als Vollkugel an dem Sitz 12 des Vorsprungs 4 befestigt, insbesondere durch einen Schweiß- oder Lötvorgang, worauf der größere Teil der Kugel 13 unter Bildung der Fläche 18 abgeschliffen wird. Eine andere Möglichkeit besteht darin, die Formkörper 5 vor ihrer Befestigung an den Vorsprüngen 4 mit der Fläche 18 zu versehen und dann nur den sich so ergebenden Teil der Kugel 13 als Formkörper 5 an dem Sitz 12 des Vorsprungs 4 zu befestigen. Die Frontlinie 17 und die Fläche 18 müssen nicht gerade in das Material des Vorsprungs 4 einlaufen, wie in durchgezogener Linie dargestellt. Zur Vereinfachung des Schleifvorgangs kann es sinnvoll sein, die Frontlinie 17 und die Fläche 18 dort anzuordnen,wo dies durch eine strichpunktierte Linie 32 in Fig. 1 angedeutet ist.

In beiden Fällen muß darauf geachtet werden, daß letztlich am fertigen Sägeband ein Formkörper 5 mit einem sichelförmigen Querschnitt 15 entsteht, der in der erforderlichen bzw. gewünschten Lage relativ zur Bandlaufrichtung gemäß Pfeil 7 angeordnet und plaziert ist. Die Fläche 18 des Zahnes 3 ist hier mit einem positiven Spanwinkel vorgesehen. Eine Tangente 21 durch die Schnittkante 11 an die Kugel 13 bzw. den Zylinder 14 zeigt einerseits, daß im Bereich der Schnittkante 11 die Schneide 10 bzw. deren Kreisbogenlinie 16 und Frontlinie 17 einen Keilwinkel 22 einschließen, der kleiner als 90° ausgebildet ist. Die Anordnung der Schneide 10 ist dabei so getroffen, daß mit dem Keilwinkel 22 ein Freiwinkel 23 entsteht. Dieser Freiwinkel 23 erstreckt sich nicht nur, wie in Fig. 1 dargestellt, im Bereich der Zahnspitze bzw. der Schnittkante 11, sondern er ist über den gesamten freien kreisförmigen Umfang der Fläche 18 vorhanden, insbesondere auch im Bereich der Flanken des Zahnes 3, die letztlich den Schnittkanal bearbeiten. Dies ist jedenfalls dann der Fall, wenn als Formkörper 5 eine Kugel 13 bzw. ein Teil einer Kugel 5 eingesetzt wird. Aber auch bei Einsatz eines Zylinders 14 erstreckt sich der Freiwinkel 23 über die Länge der Schnittkante 11 senkrecht zur Haupterstreckungsebene 6.

Fig. 2 zeigt eine Stirnansicht eines Zahns 3 eines Sägebandes 1, also eine Ansicht entgegengesetzt zum Pfeil 7 in Fig. 1. Es ist die Breite des Grundkörpers 2 mit seinem Vorsprung 4 erkennbar. Ebenso ist hier die Fläche 18 des Formkörpers 5 mit ihrem Durchmesser relativ zur Breite des Grundkörpers 2 bzw. des Vorsprungs 4 erkennbar. Der Einfachheit halber ist die Fläche 18 als Kreisfläche dargestellt, wie dies bei einem Spanwinkel 0 der Fall ist. Es sei darauf hingewiesen, daß der Durchmesser der Fläche 18 in Fig. 2 kleiner als der Durchmesser der Kugel 13 gemäß Fig. 1 ist. Aus Fig. 2 ist erkennbar, wie sich die Schnittkante 11 über einen großen Teil des Umfanges der Fläche 18 erstreckt, insbesondere bis in den Bereich der Zahnflanken 24, die letztlich den Schnittkanal bearbeiten. Der Flankenwinkel an dem Zahn 3 beträgt hier 180° (Fig. 2) und ist daher etwa doppelt so groß wie bei Sägebändern bzw. Zahnformen im Stand der Technik. Zwar gibt es zuweilen im Stand der Technik auch bereits Zahnformen, bei denen der Flankenwinkel etwas größer als 90° ist, also stumpfwinklig ausgebildet ist, jedoch liegen die bekannten Möglichkeiten damit immer noch recht weit von 180° entfernt. In dieser Verdoppelung des Flankenwinkels wird eine wesentliche Ursache für die überraschende Verlängerung der Standzeit des neuen Sägebandes 1 gesehen. Der Flankenfreiwinkel senkrecht zur Bandlaufrichtung beträgt 0°, der Flankenfreiwinkel in Bandlaufrichtung z. B. 8°.

Fig. 3 zeigt eine ähnliche Darstellung wie Fig. 2, jedoch bei Verwendung eines Zylinders 14 bzw. eines Teils eines Zylinders 14. Es ist auch hier die Draufsicht auf die Fläche 18 dargestellt. Auch die Breitenverhältnisse zwischen dem Zylinder 14 und dem Grundkörper 2 bzw. Vorsprung 4 sind gut erkennbar.

Der Zylinder 14 bzw. der in Fig. 3 dargestellte Teil des Zylinders 14 weist eine Mantelfläche 25 und zwei Stirnflächen 26 auf. Die Mantelfläche 25 ist als zylindrische Fläche bzw. Teil einer zylindrischen Fläche ausgebildet, während die Stirnflächen 26 als ebene Flächen ausgebildet sein können. Sinnvoll ist es, wenn zwischen beiden Flächen 25 und 26 großzügig bemessene Abrundungen 27 vorgesehen sind. Besonders sinnvoll ist es, wenn sich die Abrundungen 27 über die gesamten Stirnflächen 26 erstrecken, also der Zylinder 14 gleichsam in Richtung seiner Achse 20 von Halbkugeln begrenzt wird. In diesem Falle ergeben sich die gleichen Vorteile wie bei Einsatz einer Kugel 13. Wenn dagegen ebene Stirnflächen 26 vorgesehen sind, empfiehlt es sich, die so gebildeten Zähne 3 zu schränken, um den entsprechenden Freischnitt zu erreichen.

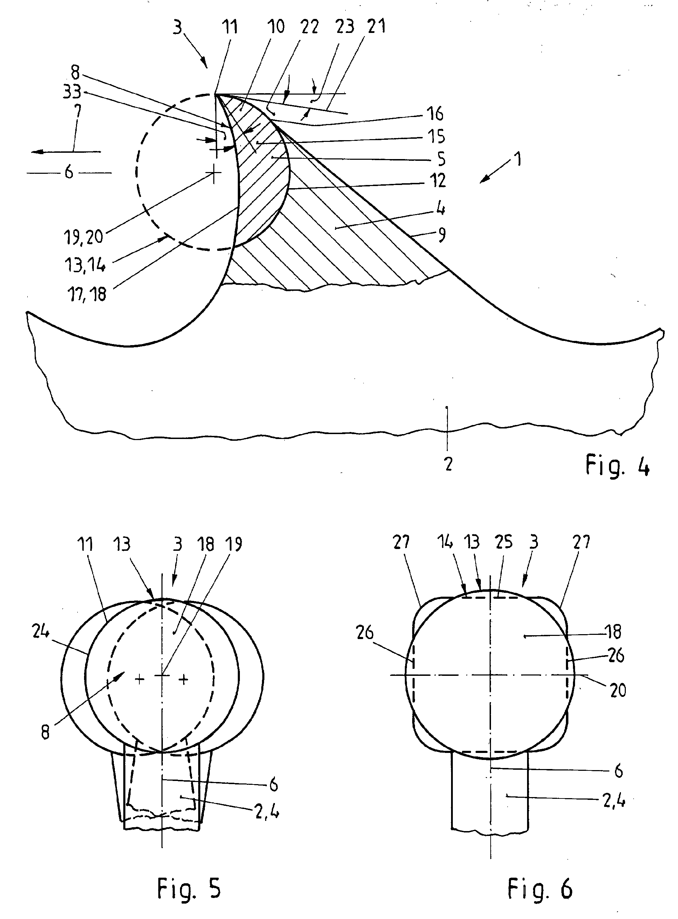

Fig. 4 zeigt eine ähnliche Darstellung wie Fig. 1. Die Fläche 18 wird hier jedoch nicht von einer ebenen Fläche, sondern von einer gekrümmt verlaufenden Fläche 18 gebildet. Auch dabei ist erkennbar, daß der den jeweiligen Zahn 3 mitbildende verbleibende Teil der Kugel 13 oder des Zylinders 14 kleiner als eine Halbkugel bzw. ein Halbzylinder ausgebildet ist. Auch hier ist wieder ein positiver Spanwinkel 33 an dem Zahn 3 verwirklicht. Die Summe aus Spanwinkel 33, Keilwinkel 22 und Freiwinkel 23 beträgt 90°. Es ist aber weiterhin vorstellbar, daß auch negative Spanwinkel verwirklicht werden können, wobei selbst in einem solchen Falle die Beibehaltung eines umlaufenden Freiwinkels 23 möglich ist.

Fig. 5 zeigt eine ähnliche Darstellung wie Fig. 2, jedoch bei einem Sägeband 1, welches sich wiederholende Gruppen aus jeweils drei Zähnen besitzt. Der erste Zahn in der Zahngruppe ist beispielsweise ein gerader, also ungeschränkter Zahn. Der zweite Zahn ist nach rechts und der dritte Zahn entsprechend nach links geschränkt, jeweils aus der Haupterstreckungsebene 6 heraus. Sämtliche Zähne 3 besitzen Formkörper 5, die auf Basis einer Kugel 13 gebildet sind. Auch hier weisen die Formkörper 5 nur eine einzige geschliffene Fläche 18 auf. Das Sägeband läßt sich äußerst preiswert herstellen und besitzt überraschend große Standzeiten, wie nachfolgend noch erläutert wird. Es versteht sich, daß auf die beschriebene Art und Weise auch andere Zahnfolgen herstellbar sind, beispielsweise eine Zahnfolge aus fünf Zähnen 3, von denen der erste gerade Zahn eine Führungsfunktion einnimmt, während die nachfolgenden Zähne paarweise unterschiedlich geschränkt sind, um den Schnittkanal zu verbreitern.

Fig. 6 zeigt eine Ansicht eines Sägebandes 1 im Bereich der Zähne 3, welches gemäß der Vor- und Nachschneidertechnik ausgebildet ist. Der Vorschneider ist unter Verwendung einer Kugel 13 und der Nachschneider unter Einsatz eines Zylinders 14 gebildet. Die Überdeckung kann so sein, wie dies in Fig. 6 erkennbar ist. Der Vorschneider arbeitet in drei Sektionen des Schnittkanals und räumt dabei aus dem Schnittkanal drei voneinander getrennte Materialbereiche aus, während der Nachschneider in zwei Sektionen des Schnittkanals arbeitet und zwei Materialbereiche ausräumt. Durch eine andere Überdeckung, insbesondere durch Verwendung eines vergleichsweise längeren Zylinders 14 mit kreisbogenförmig begrenzten Stirnflächen 26, ist es möglich, mit dem Vor- und dem Nachschneider insgesamt drei Materialbereiche aus dem Schnittkanal auszuräumen, wobei der Vorschneider als höchster Zahn in der Mitte des Schnittkanales einen Span ausräumt und der Nachschneider zwei weitere Späne an den Seiten des Schnittkanales entfernt und damit letztlich auch für die Verwirklichung der Schnittgüte, d. h. der Ebenheit und Glattheit der entstehenden Wandung des Werkstückes im Anschluß an den Schnittkanal verantwortlich ist. Auch hierbei kommt man ohne Schränkung aus, was insbesondere die Herstellung vereinfacht. Andererseits können aber auch Zahnfolgen aus mehr als zwei Zähnen verwirklicht werden, insbesondere unter Einsatz geschränkter Folgezähne.

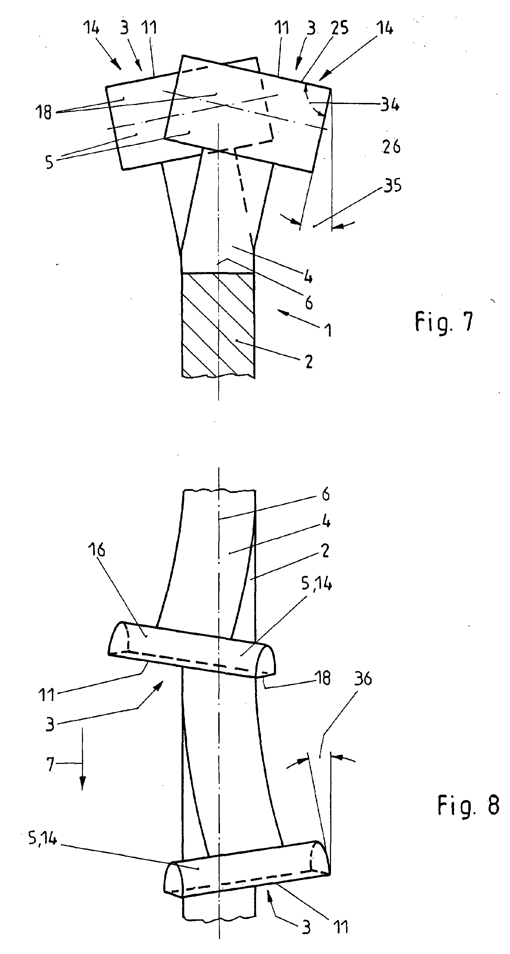

In den Fig. 7 und 8 ist der sich wiederholende Teil eines weiteren Sägebandes dargestellt. Das Sägeband weist eine sich wiederholende Folge von zwei Zähnen 3 auf, die abwechselnd nach links und rechts aus der Haupterstreckungsebene 6 heraus geschränkt sind. An jedem Vorsprung 4 ist ein Teil eines Zylinders 14 als Formkörper 5 eingesetzt. Der Teil des Zylinders 14 ist kleiner als ein Halbzylinder und weist auf seiner in Bandlaufrichtung gemäß Pfeil 7 weisenden Seite die Fläche 18 auf, die in Verbindung mit der den Abschnitt des Zylinders 14 nach hinten begrenzenden Kreisbogenlinie 16 die Schnittkante 11 an jedem Zahn 3 bildet. Als Formkörper 5 werden hier Abschnitte von Zylindern 14 eingesetzt, deren Stirnflächen 26 gleichsam ohne Abrundungen an die Mantelfläche 27 anschließen. Demzufolge beträgt der Flankenwinkel 34 am Zahn 3 90° und der Flankenfreiwinkel 35 senkrecht zur Bandlaufrichtung gemäß Pfeil 7 z. B. etwa 10°, wie dies in Fig. 7 dargestellt ist. Beim Schränken wird der einzelne Zahn bewußt nicht nur sauber aus der Haupterstreckungsebene heraus abgebogen, sondern gelangt gleichsam in eine verdrehte Lage, wie dies aus Fig. 8 erkennbar ist. Demgemäß ergibt sich ein Flankenfreiwinkel 36 entgegen der Bandlaufrichtung gemäß Pfeil 7, der hier z. B. 8° betragen kann. Die den Schnittkanal bearbeitende Kante jedes Zahnes 3 erfährt durch Benutzung des Sägebandes infolge Verschleiß eine Verrundung, so daß sich der Flankenwinkel, der ursprünglich angenähert 90° beträgt, in Richtung auf 180° verändert bzw. abrundet, so daß damit eine ähnliche Wirkung erreicht wird, wie dies anhand von Fig. 2 für den dort angegebenen Flankenwinkel beschrieben wurde.

Das Sägeband gemäß den Fig. 7 und 8 läßt sich sehr einfach herstellen. Die Vorsprünge 4 werden in identischer Form am Grundkörper 2 des Bandes hergestellt, beispielsweise gefräst. Anschließend werden die Zylinder 14, beispielsweise als fertige Formkörper 5 einschließlich der Fläche 18 in der richtigen Relativlage an den Vorsprüngen 4 befestigt. Schließlich erfolgt noch die Schränkung nach rechts und links abwechselnd. Es ist auch möglich, volle Zylinder 14 an den Vorsprüngen 4 zu befestigen und nach dem Schleifen der Flächen 18 die Schränkung durchzuführen.

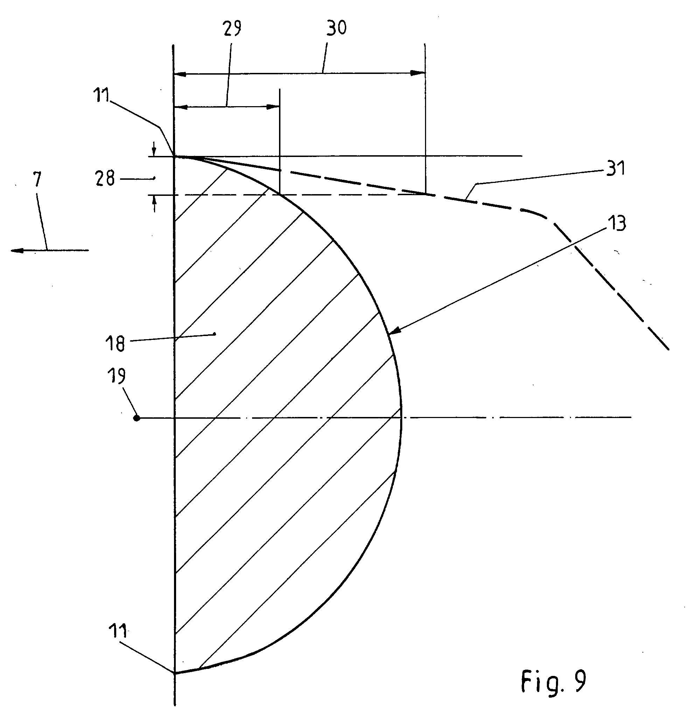

In Fig. 9 ist ein Schnitt durch eine Halbkugel um den Mittelpunkt 19 dargestellt. Die durchgezogene Linienführung zeigt den Schnitt durch einen Zahn 3 der eingesetzten Kugel 13 im Vergleich zu einem mit gestrichelter Umrißlinie angedeuteten Zahn aus dem Stand der Technik. Es kann sich um einen Schnitt handeln, der in gleicher Relativlage geführt ist wie bei den Darstellungen der Fig. 1 und 4. Fig. 7 zeigt jedoch zugleich Schnitte in davon abweichenden Winkellagen über den gesamten Umfang der Schnittkante 11.

Bei Einsatz des neuen Sägebandes im Vergleich zum Stand der Technik läßt sich die unterschiedliche Länge von Verschleißmarken im Anschluß an die Schnittkante 11 darstellen. Bei einem angenommenen Verschleiß 28 ergibt sich beim Anmeldungsgegenstand unter Einsatz der Kugel 13 eine Länge 29 der Verschleißmarken, die erheblich kürzer als die Länge 30 der Verschleißmarken bei gleichem Verschleiß 28 im Stand der Technik auftritt. Dies ist darauf zurückzuführen, daß die Oberfläche der Kugel bzw. des sich abbildenden Kreises zunehmend stärker zurückspringt als eine eben geschliffene Fläche 31 an einem Zahn 3 im Stand der Technik im Bereich der Zahnspitze. Die prinzipbedingt kürzer ausgebildeten Verschleißmarken bzw. der diese verursachende Verschleiß ist also geringer als im Stand der Technik. Hieraus resultiert trotz wesentlich einfacherer Herstellung des Sägebandes eine erhöhte Standzeit.

In Richtung des Verlaufes der Schnittkane 11 ist vorstellbar, daß eine vergleichsweise größere Länge zum Schneiden benutzt wird. Während z. B. im Stand der Technik wei geschränkte Zähne in seiner Breite ausräumen bzw. festlegen, kann beim angemeldeten Sägeband in seiner einfachsten Ausführungsform - lediglich unter Einsatz identischer ungeschränkter Zähne - an jedem Zahn eine sich über die volle Breite des Schnittkanals erstreckende Schneide genutzt werden.

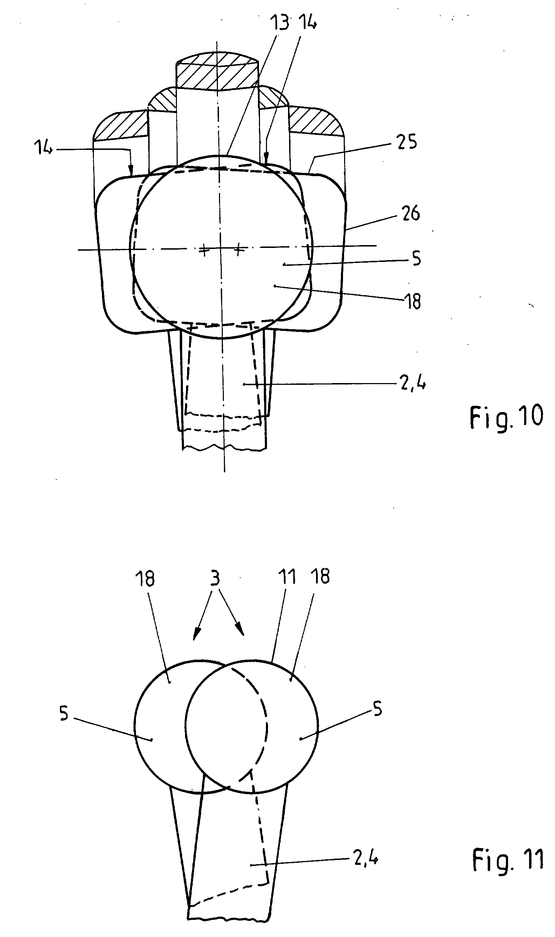

Fig. 10 zeigt eine weitere Ausführungsmöglichkeit eines Sägebandes. Es ist hier eine Zahngruppe aus drei Zähnen vorgesehen. Der erste Zahn in der Zahngruppe ist unter Verwendung einer Kugel 13 gebildet. Die beiden folgenden Zähne, die jeweils abwechselnd geschränkt angeordnet sind, sind unter Verwendung je eines Zylinders 14 gebildet. Die Querschnittsform der ausgeräumten Späne ist in Projektion dazu verdeutlicht. Man erkennt, daß jeder Zahn 3 - bei entsprechendem Vorschub - nur seinen eigenen Spananteil aus dem Schnittkanal ausräumt. Es besteht keine Überdeckung der Späne quer zum Schnittkanal. Demzufolge ist die Anordnung der Zähne in der Zahnfolge beliebig.

Fig. 11 zeigt schließlich noch eine weitere sehr einfache Ausführungsform eines Sägebandes 1 mit Zähnen 3, die jeweils von Teilen von Kugeln 13 gebildet werden. Die Zähne sind abwechselnd links und rechts geschränkt. Auch bei dieser Ausführungsform stellt die jeweilige Fläche 18 jedes Zahnes die einzige geschliffene Fläche dar. Auch damit wird hier die Schleifarbeit erheblich reduziert. Die Schränkung ist ein Bearbeitungsvorgang, der die Herstellung nur vergleichsweise wenig verteuert. Fig. 9 läßt im Gegensatz zu Fig. 2 das insoweit andere Durchmesserverhältnis der Kugeln 13 zu der Breite des Grundkörpers 2 erkennen. In Fig. 9 finden Kugeln 13 relativ kleinen überschüssigen Durchmessers Verwendung, so daß die Schränkung der Zähne 3 angebracht ist.

### BEZUGSZEICHENLISTE

- 1 -: Sägeband
- 2 -: Grundkörper
- 3 -: Zahn
- 4 -: Vorsprung
- 5 -: Formkörper
- 6 -: Haupterstreckungsebene
- 7 -: Pfeil
- 8 -: Zahnbrust
- 9 -: Zahnrücken
- 10 -: Schneide

- 11 -: Schnittkante
- 12 -: Sitz
- 13 -: Kugel
- 14 -: Zylinder
- 15 -: Querschnitt
- 16 -: Kreisbogenlinie
- 17 -: Frontlinie
- 18 -: Fläche
- 19 -: Mittelpunkt
- 20 -: Achse

- 21 -: Tangente
- 22 -: Keilwinkel
- 23 -: Freiwinkel
- 24 -: Zahnflanke
- 25 -: Mantelfläche
- 26 -: Stirnfläche
- 27 -: Abrundung
- 28 -: Verschleiß
- 29 -: Länge
- 30 -: Länge

- 31 -: Fläche
- 32 -: Linie
- 33 -: Spanwinkel
- 34 -: Flankenwinkel
- 35 -: Flankenfreiwinkel
- 36 -: Flankenfreiwinkel

## Patentansprüche

1. Sägeband (1) für insbesondere abrasive Werkstoffe, mit einem bandförmigen Grundkörper (2) und an dessen einer Längskante vorgesehenen Vorsprüngen (4), die je einen Sitz (12) aufweisen, an dem je ein Formkörper (5) aus hartem Schneidstoff befestigt ist, der in der Haupterstreckungsebene (6) des Sägebandes (1) einen Querschnitt (15) und eine definierte, sich quer zur Haupterstreckungsebene (6) erstreckende Schneide (10) aufweist, wobei jeder Vorsprung (4) mit seinem Formkörper (5) einen Zahn (3) bildet, **dadurch gekennzeichnet, daß** der Querschnitt (15) des Formkörpers (5) in der Haupterstreckungsebene (6) des Sägebandes (1) auf der dem Sitz (12) zugekehrten Seite von einer Kreisbogenlinie (16) und auf der dem Sitz (12) abgekehrten Seite von einer Frontlinie (17) einer Fläche (18) begrenzt ist, und daß die Kreisbogenlinie (16) und die Frontlinie (17) einen Keilwinkel (22) kleiner 90° einschließen und unter Bildung eines Freiwinkels (23) angeordnet sind.

2. Sägeband nach Anspruch 1, **dadurch gekennzeichnet, daß** als Formkörper (5) ein Teil einer Kugel (13) vorgesehen ist.

3. Sägeband nach Anspruch 1, **dadurch gekennzeichnet, daß** als Formkörper (5) ein Teil eines Zylinders (14) vorgesehen ist.

4. Sägeband nach Anspruch 2 oder 3, **dadurch gekennzeichnet, daß** nur die den Formkörper (5) auf der dem Sitz (12) abgekehrten Seite begrenzende Fläche (18) geschliffen ausgebildet ist.

5. Sägeband nach einem oder mehreren der Ansprüche 1 bis 4, **dadurch gekennzeichnet, daß** die Fläche (18) als ebene Fläche ausgebildet ist.

6. Sägeband nach Anspruch 2, **dadurch gekennzeichnet, daß** der Teil der Kugel (13) kleiner als eine Halbkugel ist.

7. Sägeband nach Anspruch 3, **dadurch gekennzeichnet, daß** der Teil des Zylinders (14) im Übergangsbereich zwischen seiner Mantelfläche (25) und seinen Stirnflächen (26) abgerundet ausgebildet und mit seiner Achse (20) senkrecht zur Haupterstreckungsebene (6) des Sägebandes (1) angeordnet ist.

8. Sägeband nach einem oder mehreren der Ansprüche 1 bis 7, **dadurch gekennzeichnet, daß** zumindest einige der Zähne (3) geschränkt ausgebildet sind.

9. Verfahren zur Herstellung eines Sägebandes zum Zerteilen insbesondere abrasiver Werkstoffe, indem an einem bandförmigen Grundkörper (2) und an dessen einer Längskante Vorsprünge (4) mit je einem Sitz (12) gebildet werden, an jedem Sitz (12) je ein Formkörper (5) aus hartem Schneidstoff befestigt wird, und der Formkörper (5) auf der dem Sitz (12) abgekehrten Seite eine Fläche (18) zur Bildung einer Schneide (10) eines Zahns (3) bekommt oder aufweist, **dadurch gekennzeichnet, daß** an jedem Sitz (12) als Formkörper (5) eine Kugel (13), der Teil einer Kugel, ein Zylinder (14) oder der Teil eines Zylinders so befestigt wird, daß die Schneide (10) einen Keilwinkel (22) kleiner 90° hat und ein Freiwinkel (23) gebildet ist.

10. Verfahren nach Anspruch 9, **dadurch gekennzeichnet, daß** der Formkörper (5) nur auf der dem Sitz (12) abgekehrten Seite geschliffen wird.

11. Verfahren nach Anspruch 9 oder 10, **dadurch gekennzeichnet, daß** zumindest einige der Zähne (3) geschränkt werden.
